# EUROPEAN PATENT APPLICATION

(11) **EP 2 645 335 A1**
(43) Date of publication of application: **02.10.2013**
(21) Application number: 12162170.0
(22) Date of filing: 29.03.2012
(51) Int. Cl.: G06T 19/00

(54) **Visual assistance system for facility maintenance**

(71) Applicant: Elomatic Oy, 20810 Turku (FI)
(72) Inventor: Häkli, Jesse, 40930 Kinkomaa (FI); Makkonen, Mika, 40320 Jyväskylä (FI); Summanen, Jukka, 40270 Palokka (FI)
(74) Representative: Maskula, Silla Marjatta

(57) **Abstract**

The invention relates to facility maintenance, where data structures relating to operational units of the facility and to maintenance tasks are formed to facilitate maintenance operations. The maintenance data may comprise information of a maintenance time of the operational unit, and detail information on the operational unit. The maintenance information and information on the operational units are displayed to the user. When a user selects information of the maintenance task, a limited rendering of a panoramic picture (or a view of a 3D picture) of the facility is created and shown. Documents e.g. in a document storage may also be linked to the 3D or panoramic picture so that the documents can be readily retrieved to viewing. For this purpose, a data structure for linking the documents and the 3D panoramic picture is created, and a control can be shown on the panoramic image to access the documents.

## Description

### Field of the Invention

The present invention relates to computerized methods, computer systems and computer program products for carrying out maintenance of facilities such as production facilities.

### Background of the Invention

Modern facilities are designed using computer-aided design. Such a design process leads to a model of the facility where every element has its own model, together with dimension information, and a part of the facility model can easily be viewed to get an understanding of the locations of different operational units such as pumps, motors, valves or other machine elements.

Facilities are often maintained with the help of a maintenance system. Whenever an operational unit develops a malfunction, or a regular timely maintenance is scheduled, a maintenance task is added to the system. This task indicates the operational unit to be serviced, as well as the time when it is due for maintenance, and the maintenance personnel can thus be allocated the maintenance tasks in a systematic manner. The maintenance system may contain other information on the unit to be serviced, e.g. manuals, type and operational data, and such. When a maintenance person receives the maintenance task, information on the task as well as the unit can be displayed to the maintenance person. In a fully computerized system, the maintenance person may view this information on a computer screen, and/or the information may be displayed by printing it on paper.

To make sure that the maintenance is carried out efficiently and the correct maintenance operations are carried out on the correct operational units, the correct operational unit needs to be located in the physical facility. In a large facility, this may be a tedious job. For this purpose, the computer model of the facility may help. When a certain operational unit with a certain identity is related to the maintenance task, the operational unit can be located in the computer model so that the maintenance person can more easily locate the real operational unit in the real facility.

Computer models of a facility may often be inaccurate. The structure of the facility or the location of individual operational units may have been changed without all changes having been updated to the model. Furthermore, there may be facilities where a computer model does not exist or is not easily available to the maintenance personnel due to the complexity of the model or the cost of software required to view it.

Therefore, there remains a need for a solution that makes maintenance of a facility easier and more reliable.

### Summary of the Invention

Now there has been invented an improved method and technical equipment implementing the method in a system, by which the above problems are alleviated. Various aspects of the invention include a method, a system, a computer program product on a computer readable medium comprising a computer program stored therein, as well as a computer data structure, which are characterized by what is stated in the independent claims. Various embodiments of the invention are disclosed in the dependent claims.

The invention relates to facility maintenance, where data structures relating to operational units of the facility and to maintenance tasks are formed to facilitate maintenance operations. The maintenance data may comprise information of a maintenance time of the operational unit, and detail information on the operational unit. The maintenance information and information on the operational units are displayed to the user. When a user selects information of the maintenance task, a limited rendering of a panoramic picture (or a view of a 3D picture) of the facility is created and shown. Documents e.g. in a document storage may also be linked to the 3D or panoramic picture so that the documents can be readily retrieved to viewing. For this purpose, a data structure for linking the documents and the 3D panoramic picture is created, and a control can be shown on the panoramic image to access the documents.

The various embodiments may use an essentially 360 degree panoramic images e.g. taken with a special panoramic camera device, and render limited views upon need to the user. The system may be web-based, or it may be installed as a stand-alone system on a computer, e.g. a portable tablet computer. The system may comprise, in addition to the 360 degree maintenance view, workgroup functions such as a (shared) calendar, operations log and a discussion forum. The system may comprise a document management system linked to the panoramic maintenance view. Operational units and maintenance tasks can be added to the system as needed, and uploaded to a server for real-time operation.

### Description of the Drawings

In the following, various embodiments of the invention will be described in more detail with reference to the appended drawings, in which
- Fig. 1a: shows a diagram of a facility maintenance system according to an embodiment;
- Fig. 1b: shows a diagram of a server in a facility maintenance system according to an embodiment;
- Fig. 1c: shows a diagram of a client device in a facility maintenance system according to an embodiment;
- Fig. 2: shows a user interface of a facility maintenance system according to an embodiment;
- Fig. 3: shows a user interface of a facility maintenance system according to another embodiment;
- Fig. 4: shows a structural diagram of the data structure for the facility maintenance system according to an embodiment;
- Fig. 5a and 5b: show flow charts of maintenance methods according to embodiments of the invention; and
- Fig. 6: shows a flow chart of a maintenance method according to an embodiment.

### Detailed Description of the Example Embodiments

In the following, several embodiments of the invention will be described in the context of a maintenance system for a facility. It is to be noted, however, that the invention is not limited to industrial operations. In fact, the different embodiments have applications widely in any environment where navigation in a complex environment or storage of documents related to a complex environment is required.

In the context of the various embodiments, a facility may be understood to be any industrial, scientific or engineering facility, or a real estate facility. Examples of such facilities may be a production or assembly factory, power mill, goods handling facility, ship, airplane, building, transformer, computer server room or building, crane and a farm or other agricultural facility. Event cities and infrastructure networks of cities may be considered as a facility.

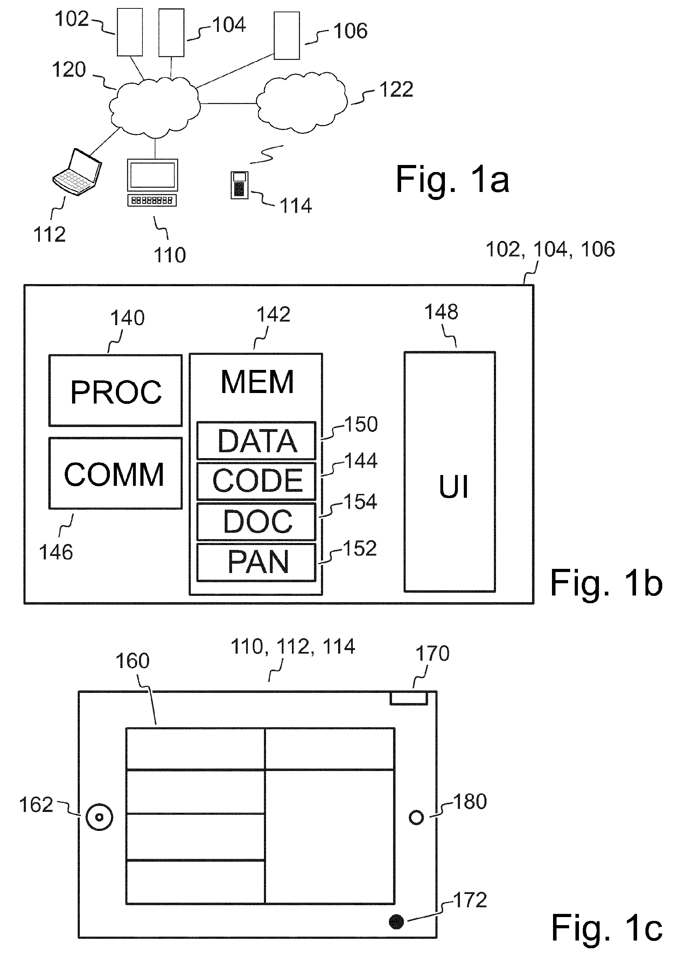

Fig. 1a shows a diagram of a facility maintenance system according to an embodiment. The system may comprise one or more servers 102, 104, 106, one or more client devices 110, 112, 114, and one or more wireless or wired networks 120, 122 to which the servers and client devices are connected. The servers may carry computer program code, memory such as hard drives and volatile memory, and other means for carrying out server functionality such as providing a document storage, hosting a facility maintenance system to be accessed over the network e.g. as a web service (e.g. using the http protocol) or a client-server service, and storing panoramic image representations of the facility. The different functions may be carried out on one server or they may be distributed to different servers. A single function may be provided by a single server or it may be distributed across servers, e.g. as a distributed document storage. Some or all of the data, documents and functionality may also reside on the client devices. For example, a client device may be a thin client such that it comprises a web browser through which the maintenance service is accessed, or it may comprise client software and/or data for the service, e.g. such that even off-line operation is possible. The client device may act as the user interface to the service, or the service may be accessed directly using a server computer.

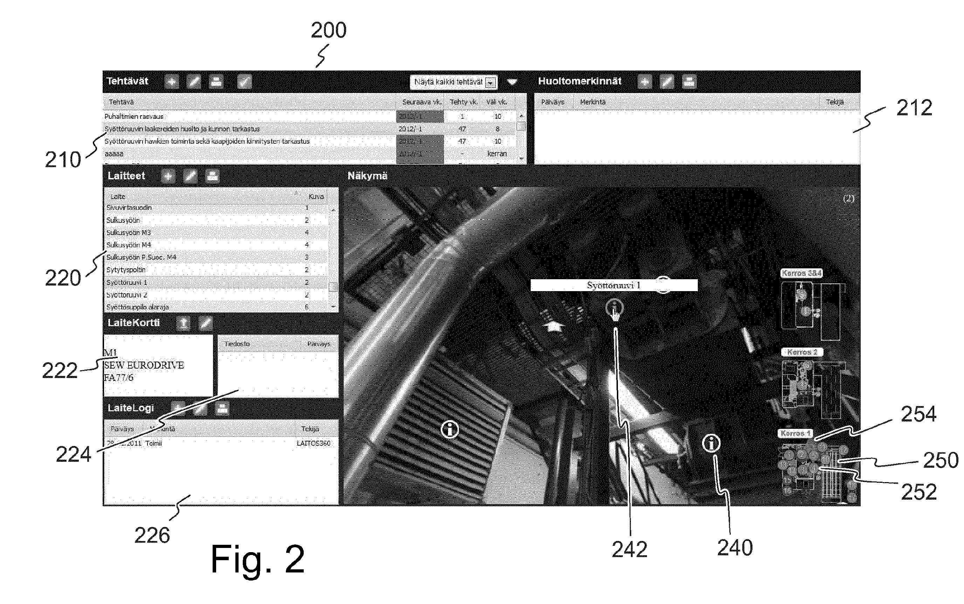

The different computers of the system comprise memory and at least one processor and computer program code in the memory. This computer program code is configured to control the computer and/or other computers of the system, when the code is executed on the at least one processor. Thus, methods for maintenance of a facility may be carried out. Such methods will be described later e.g. in connection with Figs 2, 3, 5 and 6.

Fig. 1b shows a diagram of a server in a facility maintenance system according to an embodiment. The server 102, 104, 106 may comprise one or more processors 140, memory 142 for storing data and computer program code 144 for controlling the server, one or more communication modules 146 and a user interface 148. The server may also hold a data structure 150 in the memory, such as a data structure for controlling the creation and display of a panoramic rendering of the panoramic image representation 152 and/or for retrieving documents 154 linked to the panoramic image representation.

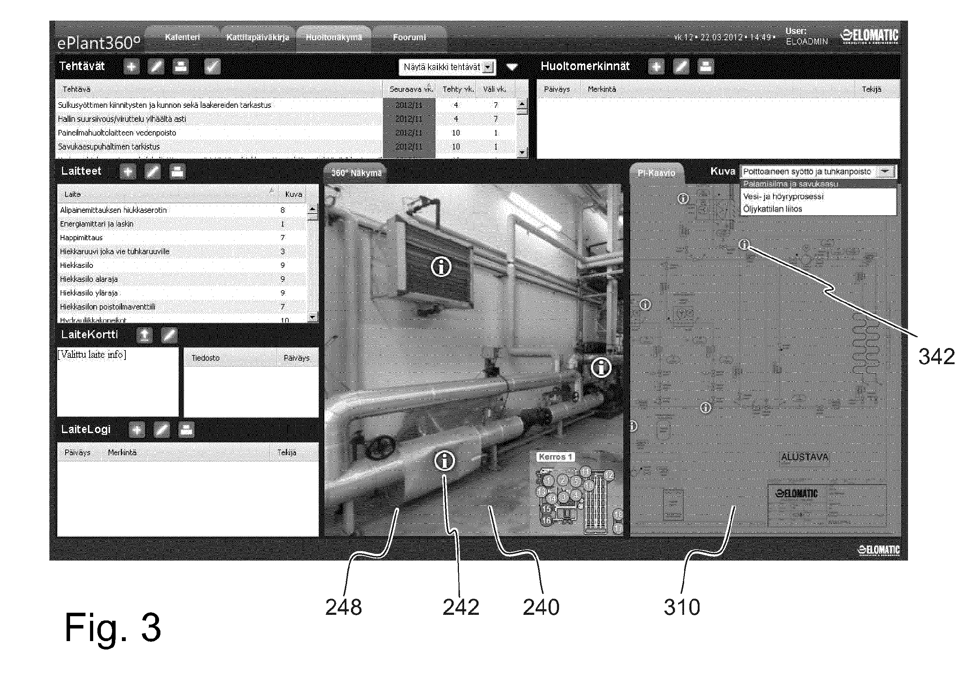

Fig. 1c shows a diagram of a client device in a facility maintenance system according to an embodiment. The client device 110, 112, 114 may comprise one or more processors, memory, computer program code and data like the servers. The client device may also comprise a user interface with e.g. a display and a touch screen 160, hardware controls 162, audio input 172 and output 170 devices, as well as a camera 180. The device may comprise a browser for accessing the maintenance service, or the device may comprise a facility maintenance application. Examples of the user interface are shown in Figs. 2 and 3.

Fig. 2 shows a user interface of a facility maintenance system according to an embodiment. The user interface 200 may comprise a list of maintenance tasks 210, containing information on next time of service, previous service time, and/or period of maintenance e.g. in weeks. Notes on performed maintenance operations may also be shown 212 for the selected maintenance task. The user interface may also comprise a list of operational units 220, together with information e.g. on their location. Data on individual units may be shown in a unit card 222 together with related documents 224 and/or a unit log 226. The user interface may also comprise an area for showing a panoramic rendering 240, where operational units may be indicated with indicators 242. A map 250 of the facility and available panoramic image representations 252, as well as a radar indicator of the current view 254 may be shown.

A panoramic image representation may be a photographic image on an a spherical, cylindrical or cubical shape acquired e.g. with a special camera device that forms a hyper-wide-angle image of the surroundings, for example essentially a 360 degree image. To be able to view such image in an understandable form, a panoramic rendering is formed of the representation so that a limited part of the representation is converted to an image. Color values of elements of the rendering (such as pixels) may be obtained from the panoramic image representation e.g. by a projection. The projection and rendering of the image to be displayed may require some processing power and/or specialized graphics hardware. With the use of panoramic image representations in a maintenance system, a large number of individual images of e.g. various operational units of a facility are avoided, as is the need to manage and arrange such images. The panoramic image representations may be formatted and provided for use in e.g. 360html5 / webgl / xml format, using Flash technology and/or CSS3D. In other words, different software platforms may require the panoramic image representation to be in a certain format so that the software on the client can access the panoramic image representation and form the panoramic rendering to be shown to the user. For this purpose, a conversion between various formats may be carried out at a server of the system. In addition, the panoramic image representation may be embedded in a document such as a portable document format (PDF) document, whereby a document reader and optionally panoramic image viewer plug-in may be used to view the document.

In a method for facility maintenance, a maintenance data structure may be formed. The data structure may be related to a maintenance task, as well as to an operational unit of the facility, and may also comprise time information e.g. when a maintenance of the unit is scheduled. Information of the operational unit may also be stored in a data structure, and such information may be displayed to the user together with the related maintenance task. When a user selects a maintenance task on a user interface e.g. to view information related to the task, a panoramic rendering of a related panoramic image representation of the facility may be displayed. The panoramic rendering comprises a limited view of the panoramic image representation, for example so that the operational unit to undergo maintenance may be clearly seen, and at the same time located with respect to its surroundings in the real world.

An advantage of using panoramic image representations and panoramic renderings is that such information is cost effective to build by bringing a camera on site where a panoramic representation is needed and linking operational unit information to the representation. This is easier than e.g. forming a CAD model of an existing facility. Another advantage of panoramic renderings is that they are more realistic than CAD images and can more easily be used by the user to locate units in the real-world facility setting.

The user interface may comprise an element where the maintenance history and maintenance plan of an operational unit is shown. This allows planning and timing of maintenance tasks, e.g. so that one user may allocate maintenance tasks to others based on their availability and the required service schedule. Thus, this allows maintenance planning on the facility level, while each individual maintenance person may have a view to his/her own tasks. The user interface may be realized e.g. on a tablet computer, and if a web interface is used, a relatively common and affordable mobile device will do. Even contemporary smart phones may be used, which can easily be carried in the maintenance person's pocket. In this manner, the system may also record who has performed the maintenance operations and when, and notes on a maintenance operation may be entered to the system directly on the maintenance site.

When the maintenance person is operating the maintenance system from his/her personal client device, the system may be used to easily and reliably locate the target of the maintenance operation (the operational unit(s) like pumps or bearings that need maintenance). In contrast to current systems, embodiments of the present invention allow the maintenance person to have a realistic, photographic picture of the maintenance site simply by choosing the maintenance task to be carried out. On the other hand, the panoramic rendering comprises control points, and accessing the control point switches the active operational unit to be displayed. That is, the active operational unit is being highlighted and its information is brought on screen. As explained earlier, selecting another operational unit from a list also changes the panoramic rendering to show the operational unit. Thus, when the panoramic image representation is accessed, information on units, their control points, documents, names, map information, unit view vector information, appearance data (skin) and other information may be loaded to be accessible in the memory of the client device (or of the server). Selecting the operational unit from a list may also cause the system to limit the shown maintenance task list to those maintenance tasks that relate to the specific operational unit. In this manner, an operational unit can be viewed in the panoramic rendering and its maintenance tasks can be shown together easily.

To provide a correct view reliably to the user, a view vector relating to the operational unit (e.g. from the unit data structure) may be retrieved. The view vector comprises information for forming the panoramic rendering of the panoramic image representation, in other words, the view vector defines the direction of view and the field of view to be used in forming the image to be displayed from the 3D panoramic representation. The view vector may have e.g. pan and tilt values and a zoom factor, a field of view in angles, or other parameters defining the view to be formed and shown. In this manner, the server or client computer may compute the pixel values of the panoramic rendering from the panoramic image representation and form an image to be displayed to the user. The panoramic rendering is formed (using said view vector) so that the limited view comprises a view of the operational unit, for example in the center of the image. If multiple operational units are to be viewed simultaneously, the field of view may be grown to be broad enough and the direction of view may be set so that all units are visible on the panoramic rendering.

To provide a useful view of the appropriate operational unit, the maintenance task (or its data structure) may be linked to an operational unit, e.g. using an identifier of the unit stored in the maintenance task. An operational unit may be linked to the panoramic image representation e.g. so that a pan, tilt, field-of-view coordinate set and an identifier (e.g. number) of the appropriate panoramic image representation is stored with the operational unit data (in the operational unit data structure). The data structure thus controls the operation of the system so that when the operational unit is selected on a user interface, the panoramic image representation linked to the operational unit is caused to be used for creating the panoramic rendering to the user. Such an operation makes it easy and quick to see all necessary information related to a maintenance task. When a new maintenance task is added, an operational unit may be chosen to be related to the maintenance task, and the view vector of the unit may then be used for creating the rendering when the maintenance task is selected for viewing. Alternatively or in addition, the view vector may be associated, stored or linked to the maintenance task data structure to create a direct link from the maintenance task to the panoramic image representation. As mentioned, multiple units may also be selected, and a common view vector may be formed to show all selected units. Such a common view vector may, for example, be stored to the maintenance data structure.

An operational unit may be linked to the panoramic image representation so that a unit identifier and a view vector (pan, tilt, field of view) is stored / linked to the panoramic image representation or a related data structure. In other words, the panoramic rendering shown to the user may be made to contain a control point or information point, and selecting the information point, the maintenance task and unit data on the user interface are updated to correspond to the selected operational unit.

Documents may also be linked to the panoramic image representation and the linking may be shown to the user on the panoramic rendering. A facility data structure may be formed in a computer memory, and the facility data structure may comprise or be linked to information of one or more operational units. A document may be stored in a document storage, and the document may relate to an operational unit, and also be linked to the facility data structure. A panoramic image representation of said facility may be stored in a computer memory. This representation may comprise or be linked to information of an operational unit (or its data structure) as described above, so that the panoramic image representation can be used for creating a panoramic rendering comprising a limited view of the panoramic image representation, for example so that the operational unit is visible in the middle of the rendering. The panoramic image representation may be linked to the facility data structure, for example by forming an identifier for the representation and storing coordinates of the center point of the panoramic image representation. In this way, the information of where such panoramic image representations are available can be stored. Information may also be stored in a computer memory for forming a user interface control, for example on top of the panoramic image representation, related to an operational unit and to a document and to said. In other words, the operational unit may have an information point through which data and documents of the unit may be accessed, or the documents may be linked and shown directly on the panoramic rendering of the panoramic image representation. Documents such as photographs, manuals, plate images, design documents, video and sound files, animations and 3D models may be stored, and they may reside in an existing document storage to which a (document-specific) link is created. Accessing the information point on the user interface may open a form with data, a document list or an arrangement of documents for the user to view.

An advantage in linking the documents to the panoramic image representation(s) e.g. through the operational units and their information points is that relevant documents may be more easily and rapidly found. On larger scale, a document management system linked to panoramic image representations may provide an easier and more effective way of handling large numbers of documents related to a facility compared to a traditional folder hierarchy of documents. Thus, in response to a user operating a user interface control related to an operational unit, where an indication of said user interface control displayed understandably and for easy association on a panoramic rendering, at least part of a document relating to the operational unit may be retrieved from a document storage, and contents of the document may be displayed to a user (e.g. on a screen, by printing, or by reading the document through a speech synthesizer).

A point cloud may be understood to be a collection of real-world coordinates of the facility. For example, a pipe may be represented by a number of points (coordinates) that together define the dimensions of the pipe. Points of a point cloud may be linked to panoramic image representations, or more specifically to elements, such as pixels, of a panoramic image representation. That is, a pixel or other element of a panoramic image representation may be linked to a point in a point cloud (e.g. through a point number). Therefore, it can be determined that the pixel of a panoramic rendering made from the panoramic image representation corresponds to certain real-world coordinates of the facility. Such points may also be shown on the rendering. There may be more points than there are pixels in the panoramic image representation so that all pixels have a corresponding point, or there may be fewer points so that not all pixels have a point. An advantage of linking a point cloud to a panoramic image representation is that real-world dimensions of objects (operational units or their parts) may be determined directly from the panoramic rendering. For example, in the case of the pipe, the diameter or length of the pipe may be measured by from the panoramic rendering, e.g. by clicking with a mouse or pointing with a stylus on a touch screen.

As mentioned, a map of panoramic representations of the facility may be displayed to a user, wherein the map comprises information on locations of panoramic representations with respect to a map of the facility. Panoramic image representations may be collected to a database to form a single user interface where the user can move between panoramic image representations. The moving may take place by using the numbers or other identifiers of the available panoramic image representations and/or with arrow keys, mouse etc. The active panoramic image representation may be indicated on the user interface (the map) and a cone may indicate the limited panoramic rendering being displayed.

Fig. 3 shows a user interface of a facility maintenance system according to another embodiment. In addition to elements as explained for Fig. 2, such as the panoramic rendering 240 and the operational unit indicators 242, a process diagram 310 may be shown. The units being viewed in the rendering 240 may be shown in the diagram 310. This may happen so that if a unit 342 is selected from the diagram 310, the rendering is changed to view the unit in a manner explained earlier. Correspondingly, if a unit 242 is selected from the panoramic rendering, the diagram 310 is moved so that the corresponding unit 342 is visible in the diagram.

To display and provide controls on the process diagram, a representation of an operational unit in a process diagram may be linked to a panoramic image representation, and in response to a user selecting the representation of said operational unit in the process diagram, a panoramic rendering of the panoramic image representation may be created and displayed so that the panoramic rendering comprises a limited view of the panoramic image representation. And advantage of linking the process diagram to the panoramic image representation is that a certain operational unit in the process diagram can be quickly and easily located in the real world facility.

In addition, live images such as regularly updated still images or a video stream may be displayed corresponding to the panoramic rendering. For this purpose a source of live images (e.g. a video camera) may be linked to the corresponding panoramic image representation, where the source resides. Live images may now be displayed from the source of live images, alongside of displaying a panoramic rendering of the panoramic image representation, where the panoramic rendering comprises a limited view of the panoramic image representation, and the panoramic rendering corresponds to the live image from the source of live images. In other words, the panoramic rendering may be formed so that the view direction (pan, tilt) and field of view of the rendering from the panoramic image representation is chosen so that the panoramic rendering resembles the live image. The source of live images may thus have a link to the panoramic image representation, where a view vector corresponding to the source is given. Naturally, this view vector may change if the source can be turned to have different views. Also, a view vector of an operational unit may be used to turn the source of the live images towards the operational unit, by forming a control signal for turning and/or zooming the source (e.g. surveillance camera). An advantage of providing a live image corresponding to the panoramic rendering is that the actual, current situation on site can be confirmed, or the maintenance operations can be monitored from a distance.

The panoramic image representations may be linked and shared in a workgroup setting, as well. A panoramic image representation may be linked to items in a computerized collaboration workspace, for example to a log of the operational unit such as a boiler log, a group calendar event, a discussion forum thread, and contact information. A panoramic rendering may be displayed in association with the workgroup item on a user interface in response to a user acting on either the workgroup item or the panoramic rendering on the user interface. The workgroup services may be provided by the maintenance system such that the users may more easily manage all information in one place and stay familiar with the system.

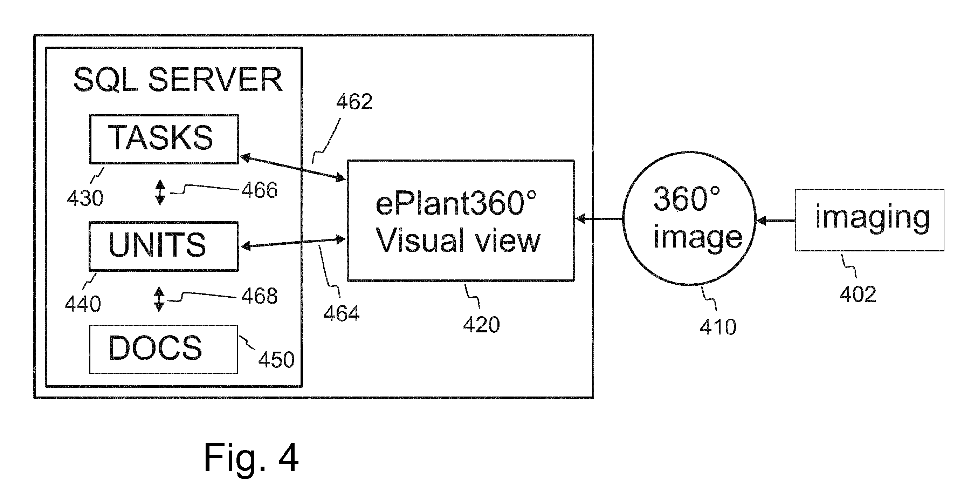

Fig. 4 shows a structural diagram of the data structure for the facility maintenance system according to an embodiment. Panoramic image representations such as 360 degree images 410 for the data structure may be obtained by processing image data 402 from a camera device. The panoramic image representations may be formed into a visual data structure 420 of the facility. The representations may be linked to each other and/or a map so that moving from one representation to another is enabled. Also, the representations may receive an identifier such as a number so that they can be accessed unambiguously. The visual data structure may be in the format of 360html5 / webgl / xml or other suitable format as explained earlier.

Maintenance tasks may be formed into a maintenance data structure 430. As shown in Fig. 2, such data structure may comprise maintenance task information such as task descriptions and remarks, as well as timing information of said tasks, and information on the operational unit(s) to be serviced. Operational units may be formed into a unit data structure 440. In addition to information on operational units, the data structure may carry information on the panoramic image representation containing the operational unit (or its picture), such as the identifier of the representation and a view vector with pan, tilt and field of view information. Documents related to the operational units may be stored in a document storage or document data structure 450. The tasks and units may be interlinked 466, as well as the documents and units 468. The identifier and view vector can be used to link the panoramic representations 420 and the operational units 440, thus also creating a dependence between a maintenance task 430 and a panoramic representation, as well as a document 450 and a panoramic representation 420.

The described data structure may be used for controlling a system for maintaining a facility. The data structure comprises at least one panoramic image representation of the facility, and the panoramic image representation comprising an operational unit (or a view of it). As described, the panoramic image representation may be used for creating a panoramic rendering comprising a limited view of the panoramic image representation. In the data structure, there may be a view vector relating to the operational unit to be viewed, so that the view vector comprises information that can be used for controlling the system. Thus, when the data structure is used in the system, the system is caused to form the panoramic rendering of the panoramic image representation so that the limited view comprises a view of the operational unit. Adding an operational unit to the data structure may happen by filling out a form on the user interface, and/or by clicking on a panoramic rendering and thus mapping the operational unit to panoramic image representation. A pan, tilt, field of view vector is in such manner defined for the new unit. As can be understood, backups of such data structures for controlling the system may be taken e.g. on a remote server.

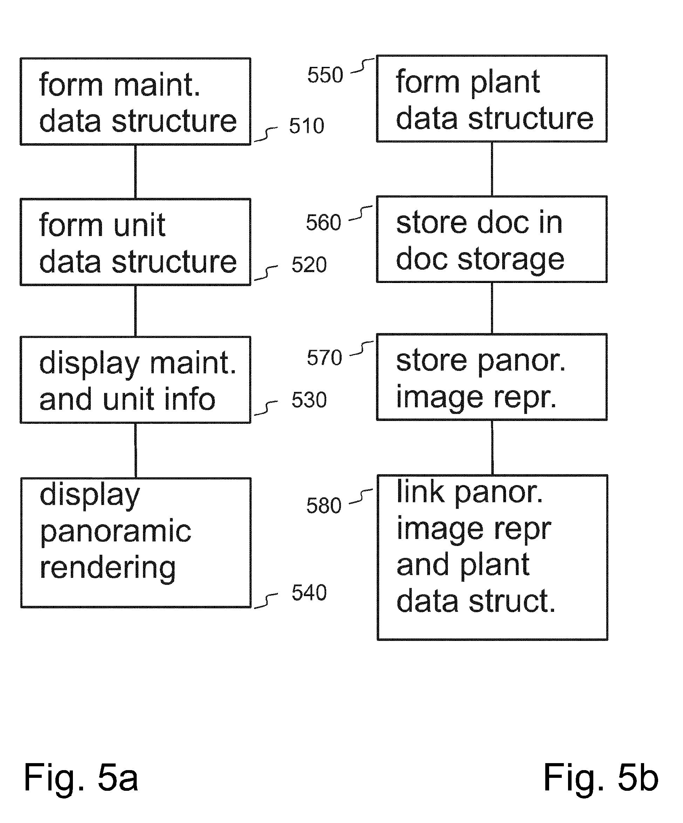

Fig. 5a and 5b show flow charts of maintenance methods according to embodiments of the invention. In Fig. 5a, in phase 510 a maintenance data structure is formed, as described earlier, comprising maintenance tasks. In phase 520, an operational unit data structure is formed carrying data of the operational unit, and for example the view vector related to the unit. In phase 530, the maintenance task and operational unit information is displayed to the user in association with each other. In phase 540, a panoramic rendering of the panoramic image representation is (created and) displayed to the user.

In Fig. 5b, in phase 550 a facility data structure is formed for use in a facility management system (maintenance system). In phase 560, one or more (typically a large number of) documents are stored in a document storage, e.g. a database. In phase 570, one or more panoramic image representations are stored to the system. In phase 580, the panoramic image representation and documents are linked, e.g. through the facility data structure or through unit data structure, or directly.

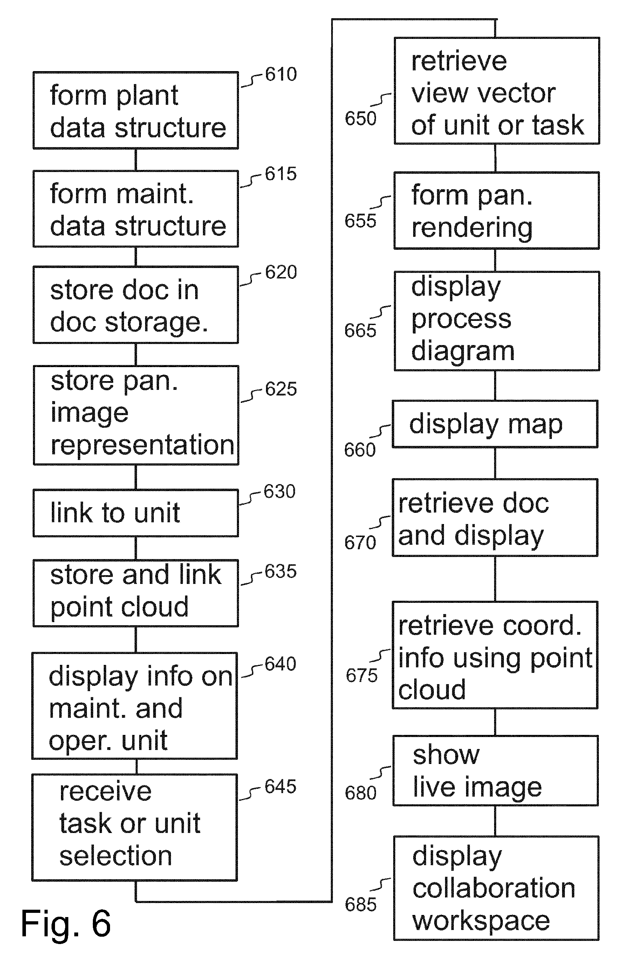

Fig. 6 shows a flow chart of a maintenance method according to an embodiment. In phase 610, a facility data structure may be formed, e.g. as described in context of Fig. 4. In phase 615, a maintenance data structure may be formed, as described earlier. In phase 620, one or more documents may be stored in a document storage, either on the system or on a separate system. In phase 625, panoramic image representations may be stored on the system. In phase 630, operational unit(s) may be linked to the panoramic image representation(s). In phase 635, a point cloud may be stored into the system and linked to the panoramic image renderings. The previous phases may be used to set up the maintenance system for use.

In phase 640, information on a maintenance task and an operational unit may be displayed in association with each other. In phase 645, a task or unit selection may be received from a user through a user interface. In phase 650, a view vector of an operational unit or a maintenance task may be retrieved, and in phase 655, a panoramic rendering may be formed using the view vector. In phase 660, a map of the facility with available panoramic image representations may be displayed. In phase 665, a process diagram may be displayed (the process diagram may be linked to the panoramic image representation as described earlier). In phase 670, a document may be retrieved and displayed e.g. in response to a user clicking on an information point on the panoramic rendering. In phase 675, coordinate information using a point cloud may be retrieved, e.g. to perform a measurement of a dimension of an operational unit element. In phase 680, a live image may be shown in association with the panoramic rendering. In phase 685, collaboration workspace items may be displayed. The previous phases may be used to employ the system in a maintenance operation.

It is clear that some of the phases 610-685 may be omitted, and only a sub-group of phases performed in the method. For example, process diagrams or live images may not be shown, or point clouds may not be used.

The methods described above may be formed into a computer program product embodied on a computer-readable medium such as a non-transitory memory, comprising computer program code, wherein the computer program code is configured to, when executed on at least one processor of the system, cause the system to carry out the phases of the methods.

The methods and elements described above may also be embodied as a computer system for facility maintenance, the system comprising at least one server, the at least one server comprising a maintenance data structure, a document storage containing at least one document and at least one panoramic image representation, the maintenance data structure comprising or being linked to information of an operational unit of said facility, the maintenance data structure comprising information of a maintenance time of the operational unit, the maintenance data structure being linked to at least one panoramic image representation of said facility, the panoramic image representation comprising said operational unit, the panoramic image representation being suitable for creating a panoramic rendering on a computer comprising a limited view of the panoramic image representation such that the limited view comprises a view of the operational unit, the maintenance data structure and the system being configured to form and display the panoramic rendering in response to a user selecting on a user interface the operational unit or a maintenance task related to the operational unit.

The methods and elements described above may also be embodied as a computer system for facility maintenance, the system comprising at least one server, the at least one server comprising a facility data structure, a document storage containing at least one document and at least one panoramic image representation, the facility data structure comprising or being linked to information of an operational unit of the facility, the facility data structure being linked to at least one panoramic image representation of the facility, the panoramic image representation comprising the operational unit, the panoramic image representation for creating a panoramic rendering on a computer comprising a limited view of the panoramic image representation such that the limited view comprises a view of the operational unit, the facility data structure and the system being configured to form a user interface control related to the operational unit, to the document and to the panoramic image representation, receive input from a user using the control and in response to the input, retrieving from the document storage at least part of the document and displaying contents of the document to a user.

The various embodiments of the invention can be implemented with the help of computer program code that resides in a memory and causes the relevant apparatuses to carry out the invention. For example, a client device may comprise circuitry and electronics for handling, receiving and transmitting data, computer program code in a memory, and a processor that, when running the computer program code, causes the client device to carry out the features of an embodiment. Yet further, a server device may comprise circuitry and electronics for handling, receiving and transmitting data, computer program code in a memory, and a processor that, when running the computer program code, causes the server device to carry out the features of an embodiment.

It is obvious that the present invention is not limited solely to the above-presented embodiments, but it can be modified within the scope of the appended claims.

## Claims

1. A method for facility maintenance, comprising:
- forming in a computer memory a maintenance data structure relating to an operational unit of the facility and to a maintenance task of the operational unit, said maintenance data structure comprising information of a maintenance time of the operational unit,
- forming in a computer memory a unit data structure relating to said operational unit of the facility, said unit data structure comprising information of said operational unit,
- displaying information of the maintenance task and information of the operational unit to a user on a user interface,
**characterized in that** the method comprises:
- in response to a user selecting said information of the maintenance task with said user interface, displaying a panoramic rendering of a panoramic image representation of said facility, said panoramic rendering comprising a limited view of said panoramic image representation.

2. A method according to claim 1, comprising:
- retrieving from a computer memory a view vector relating to said unit data structure, said view vector comprising information for forming said panoramic rendering of said panoramic image representation, and
- forming said panoramic rendering using said view vector such that said limited view comprises a view of said operational unit.

3. A method for facility maintenance, comprising:
- forming a facility data structure in a computer memory, said facility data structure comprising or being linked to information of an operational unit of said facility, and
- storing a document in a document storage, said document relating to said operational unit and said document comprised in or being linked to said facility data structure,
**characterized in that** the method comprises:
- storing a panoramic image representation of said facility in a computer memory, said panoramic image representation comprising said operational unit, said panoramic image representation for creating a panoramic rendering comprising a limited view of said panoramic image representation,
- linking said panoramic image representation to said facility data structure, and
- forming information in a computer memory for forming a user interface control related to said operational unit, to said document and to said panoramic image representation.

4. A method according to any of the above claims, comprising:
- in response to a user operating a user interface control related to said operational unit, an indication of said user interface control displayed on said panoramic rendering, retrieving from a document storage at least part of a document relating to said operational unit, and
- displaying contents of said document to a user.

5. A method according to any of the above claims, comprising:
- linking points of a point cloud to elements, such as pixels, of said panoramic rendering, wherein said points of a point cloud contain real-world coordinate information of said facility.

6. A method according to any of the above claims, comprising:
- displaying a map of panoramic image representations of said facility to a user, wherein said map comprises information on locations of panoramic image representations with respect to a map of said facility.

7. A method according to any of the above claims, comprising:
- linking a representation of said operational unit in a process diagram to said panoramic image representation, and
- in response to a user selecting said representation of said operational unit, displaying a panoramic rendering of said panoramic image representation, said panoramic rendering comprising a limited view of said panoramic image representation.

8. A method according to any of the above claims, comprising:
- linking a source of live images to said panoramic image representation,
- displaying a live image from said source of live images,
- displaying a panoramic rendering of said panoramic image representation, said panoramic rendering comprising a limited view of said panoramic image representation, wherein said panoramic rendering corresponding to said live image from said source of live images.

9. A method according to any of the above claims, comprising:
- linking said panoramic image representation to at least one item in a computerized collaboration workspace, said item being from a group of a log for said operational unit such as a boiler log, a group calendar event, a discussion forum thread, and contact information,
- displaying said panoramic rendering in association with said item on a user interface in response to a user acting on either said item or said panoramic rendering on said user interface.

10. A computer system for facility maintenance, said system comprising at least one server, said at least one server comprising a maintenance data structure, a document storage containing at least one document and at least one panoramic image representation, said maintenance data structure comprising or being linked to information of an operational unit of said facility, said maintenance data structure comprising information of a maintenance time of the operational unit, said maintenance data structure being linked to at least one panoramic image representation of said facility, said panoramic image representation comprising said operational unit, said panoramic image representation for creating a panoramic rendering on a computer comprising a limited view of said panoramic image representation such that said limited view comprises a view of said operational unit, said maintenance data structure and said system being configured to form and display said panoramic rendering in response to a user selecting on a user interface said operational unit or a maintenance task related to said operational unit.

11. A computer system for facility maintenance, said system comprising at least one server, said at least one server comprising a facility data structure, a document storage containing at least one document and at least one panoramic image representation, said facility data structure comprising or being linked to information of an operational unit of said facility, said facility data structure being linked to at least one panoramic image representation of said facility, said panoramic image representation comprising said operational unit, said panoramic image representation for creating a panoramic rendering on a computer comprising a limited view of said panoramic image representation such that said limited view comprises a view of said operational unit, said facility data structure and said system being configured to form a user interface control related to said operational unit, to said document and to said panoramic image representation, receive input from a user using said control and in response to said input, retrieving from said document storage at least part of said document and displaying contents of said document to a user.

12. A system comprising at least one computer, said computer comprising memory and at least one processor and computer program code in said memory, said computer program code being configured to, when executed on said at least one processor, cause the system to carry out the method according to any of the claims 1 to 9.

13. A computer program product embodied on a computer-readable medium such as a non-transitory memory, comprising computer program code, said computer program code being configured to, when executed on at least one processor of a system, cause the system to carry out the method according to any of the claims 1 to 9.

14. A data structure for controlling a system for maintaining a facility according to any of the claims 10 to 12, said data structure comprising at least one panoramic image representation of said facility, said panoramic image representation comprising an operational unit, said panoramic image representation for creating a panoramic rendering comprising a limited view of said panoramic image representation, said data structure comprising a view vector relating to said operational unit, said view vector comprising information such that when said data structure is used in said system, the system is caused to form said panoramic rendering of said panoramic image representation such that said limited view comprises a view of said operational unit.

15. A method, system, computer program product or a data structure according to any of the above claims, where said panoramic image representation is a photographic image on an a spherical, cylindrical or cubical shape and color values of said elements such as pixels of said panoramic rendering are obtainable from said panoramic image representation by a projection.
